# EUROPEAN PATENT APPLICATION

(11) **EP 4 344 843 A1**
(43) Date of publication of application: **03.04.2024**
(21) Application number: 23199542.4
(22) Date of filing: 25.09.2023
(51) Int. Cl.: B29B 11/16, B26F 1/24, C04B 35/80

(54) **SPIKED PREFORM TOOLING FOR IMPROVED CHEMICAL VAPOR INFILTRATION IN CERAMIC MATRIX COMPOSITES**

(30) Priority: 30.09.2022 US 202217957558
(71) Applicant: RTX Corporation, Farmington, CT 06032 (US)
(72) Inventor: LENZ, Brendan, East Hartford, 06118 (US)
(74) Representative: Dehns

(57) **Abstract**

A tooling assembly (10) for perforating a fibrous preform (14) comprises a tooling fixture (12) comprising a plurality of receiving holes (24), and a spiked array (16) comprising a plate (20) and a plurality of metallic spikes (18) projecting away from the plate (20) and toward the tooling fixture (12), each of the plurality of metallic spikes (18) corresponding to and extending towards one of the plurality of receiving holes (24). The spiked array (16) is engageable with the tooling fixture (12) such that the plurality of spikes (18) extend at least partially into respective ones of the plurality of receiving holes (24).

## Description

### BACKGROUND

The present invention relates to chemical vapor infiltration (CVI), and more particularly to improved tooling for CVI.

In the processing of ceramic matrix composites (CMCs), there is a need to infiltrate matrix within and around fibrous tow bundles to replace pore volume with dense matrix material. In a woven system, large voids often exist between adjacent tows of a preform. Such voids can become large defects after infiltration of the composite that are detrimental to composite properties. The pore network through a woven system is often highly tortuous for infiltrating reactant vapors, which leads to uneven deposition through the thickness of the preform, with, higher concentrations tending to deposit on preform surfaces and edges. This leads to an overall slower and less uniform matrix infiltration process resulting in composites with undesirably porous midplanes. Thus, a need exists for means to facilitate even matrix infiltration.

### SUMMARY

From a first aspect, there is provided a tooling assembly for perforating a fibrous preform that comprises a tooling fixture comprising a plurality of receiving holes, and a spiked array comprising a plate and a plurality of metallic spikes projecting away from the plate and toward the tooling fixture, each of the plurality of metallic spikes corresponding to and extending towards one of the plurality of receiving holes. The spiked array is engageable with the tooling fixture such that the plurality of spikes extend at least partially into respective ones of the plurality of receiving holes.

There is also provided a method of preparing a fibrous preform for use in a ceramic matrix composite that comprises supporting the preform with a tooling fixture, and perforating the preform with a spiked array to form a perforated preform, the spiked array comprising a plate with a plurality of metallic spikes projecting away from the plate. When perforating the preform, the plurality of metallic spikes extend at least partially into a plurality of respective receiving holes in the tooling fixture.

There is also provided a perforated preform formed by the method above, that comprises a plurality of cylindrical holes extending through a thickness of the preform, wherein each hole of the plurality of holes is spaced apart from an adjacent hole of the plurality of holes a distance ranging from 1.0 mm to 10 mm, and wherein each hole of the plurality of holes has a diameter ranging from 0.1 mm to 1.0 mm. The preform is optionally formed from tows of silicon carbide.

Features of embodiments are set forth in the dependent claims.

### BRIEF DESCRIPTION OF THE DRAWINGS

FIG. 1 is a simplified cross-sectional illustration of one embodiment of a perforating tooling assembly with an unperforated preform.
FIG. 2 is a simplified cross-sectional illustration of the perforating tooling assembly of FIG. 1 with a perforated preform.
FIGS. 3 and 4 are simplified two-dimensional representations of matrix formation in non-perforated, and perforated preforms, respectively.
FIG. 5 is a simplified cross-sectional illustration of an alternative embodiment of a perforating tooling assembly for a curved preform.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

This disclosure presents means for perforating a fibrous ceramic preform prior to densification via chemical vapor infiltration (CVI). Multiple embodiments of perforating tooling can be used to create holes through the thickness of the preform. Such holes facilitate access to the interior of the preform by reactant vapors such that matrix deposits in a more even manner compared to non-perforated preforms.

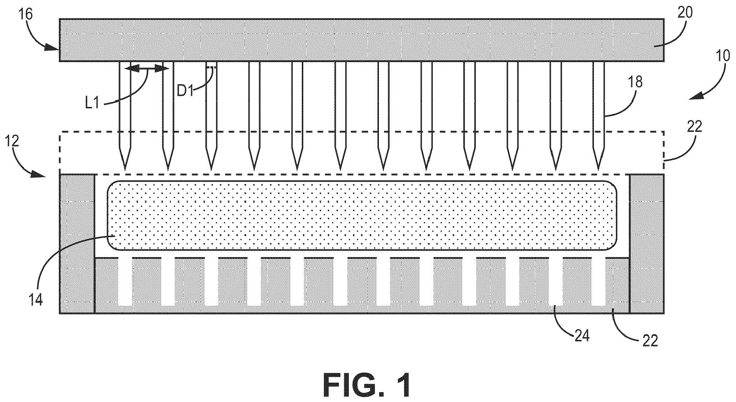

FIG. 1 is a simplified cross-sectional illustration of perforating tooling assembly 10. Tooling assembly 10, as shown in FIG. 1, includes fixture 12 supporting preform 14, and spiked array 16 disposed above preform 14. Preform 14 can be formed from fibers of ceramic (e.g., silicon carbide - SiC) tows, arranged in one of various woven architectures such as plain, harness (e.g., 3, 5, 8, etc.), twill, braid, or non-symmetric to name a few non-limiting examples. Preform 14 can have a bimodal pore distribution including intra-tow pores (i.e., open spaces between filaments within a tow) and inter-tow pores (i.e., open spaces between adjacent tows). The combined inter-tow and intra-tow porosities can represent a total porosity of preform 14 (and the resulting CMC) as a whole.

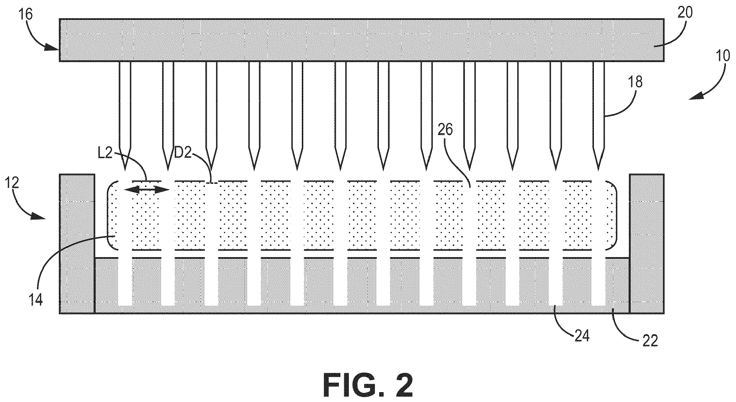

Spiked array 16 includes multiple spikes 18 arranged in rows and columns on and extending from generally planar plate 20. Spikes 18 can be spaced apart a distance, or length L1, which can be measured from the center point of one spike 18 to the center point of the adjacent spike 18. L1 can range from 1.0 mm to 10 mm. Each spike 18 can have a short to medium taper in an exemplary embodiment (e.g., as shown in FIGS. 1 and 2), such that each spike 18 has a constant diameter D1 along its length until tapering near its tip. D1 can range from 0.1 mm to 1.0 mm. In an alternative embodiment, each spike 18 can have a long to extra-long taper with the extent of diameter D1 along the length being shorter and further from the tip relative to a short or medium taper. Spikes 18 can be inserted into and through preform 14 to form a perforated preform 14. Fixture 12 can include generally planar plate 22 with receiving holes 24 corresponding to spikes 18. Holes 24 can extend at least partially through the thickness of plate 20, as shown, or extend completely through in an alternative embodiment. Depending on the shape and length of spikes 18, holes 24 can be fairly shallow, for example, formed as dimples or grooves in another alternative embodiment. In one embodiment, spikes 18 can be inserted directly into preform 14, that is, without any intervening plates. In an alternative embodiment, fixture 12 can further include an additional, upper plate 22 (represented in FIG. 1 by dashed lines), and spikes 18 are inserted through corresponding holes (not shown) in upper plate 22 to reach preform 14. In such an embodiment, spikes 18 can be relatively longer than spikes 18 that directly penetrate preform 14.

In one embodiment, fixture 12 can be formed from graphite, while spiked array 16 can be formed from a metallic material and manufactured, for example, via additive manufacturing. Metallic spikes 18 can further be coated with a ceramic, such as SiC, such that any contaminants left in preform 14 after the removal of spikes 18 would be from the ceramic coating and beneficially incorporated into the densified component. In an alternative embodiment, fixture 12 can also be formed from a metallic material and formed via traditional or additive manufacturing.

FIG. 2 is a simplified cross-sectional illustration of perforating tooling assembly 10, after spikes 18 have been removed from preform 14. Accordingly, preform 14 is perforated with holes 26 corresponding to respective spikes 18. As shown in FIG. 2, holes 26 can extend fully through the thickness of preform 14. Although represented schematically as cylindrical, holes 26 can have other shapes, such as conical, depending on the shape of spikes 18. Holes can be spaced apart a distance L2, which can be measured from the center point of one hole 26 to the center point of the adjacent hole 26. Because holes 26 correspond to spikes 18, L2 can also range from 1.0 mm to 10 mm. Similarly, each hole 26 can have a diameter D2 ranging from 0.1 mm to 1.0 mm. Hole 26 and spike 18 spacing and dimensions can be selected based on, for example, the thickness of preform 14, with larger diameters selected for thicker panels to ensure sufficient infiltration with reactant vapors.

Prior to insertion of spikes 18 into preform 14, a lubricating solution can be applied to preform 14 to prevent damage to preform 14 from sticking/catching of spikes 18. Exemplary solutions can include water with polyvinyl alcohol (PVA), or alcohol with polyvinyl butyral (PVB). The lubricating solution can be applied (e.g., via spraying, pipetting, dipping, etc.) to preform 14, to individual plies of preform 14, and/or to individual tows prior to weaving. With spikes 18 inserted into preform 14, preform 14 can undergo a stabilization process, which in an exemplary embodiment, can be a drying step to remove the solvent (i.e., water or alcohol) of the lubricant solution. Stabilization can further include removal of/burning-off the PVA or PVB by, for example, heating preform 14 in an inert environment. Stabilization of preform 14 in this manner helps prevent warping of holes 26 after removal of spikes 18 during subsequent processing, such as debulking.

In one embodiment, preform 14 can be transferred to CVI tooling after the removal of spikes, and any intervening processing. This may be necessary where fixture 12 is formed from metal, thus preform 14 can be transferred to graphite tooling. Further, even if a graphite fixture 12 was used during perforation with no upper plate 22, a graphite upper plate (e.g., upper plate 22) can be placed over perforated preform 14 after removal of spikes 18. Suitable CVI tooling should include infiltration holes aligned with holes 26 in preform 14, which gives reactant vapors access to holes 26. Holes 26 can provide a less tortuous path for reactant vapors to diffuse and deposit matrix throughout preform 14.

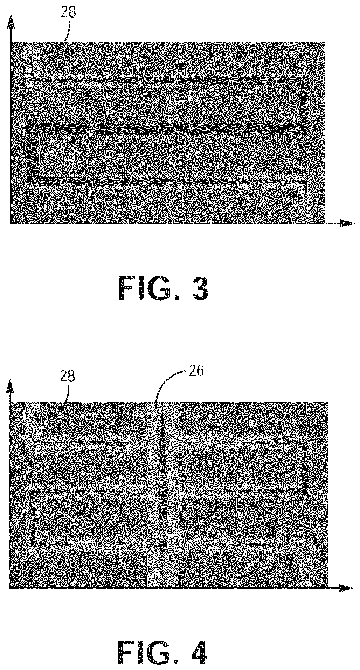

FIGS. 3 and 4 are simplified two-dimensional representations of matrix formation in a non-perforated preform (FIG. 3) compared to a perforated preform (e.g., preform 14 with holes 26) The x and y-axes in both FIGS. 3 and FIG. 4 represent the distance traveled by reactant vapors. In FIG. 3, no direct path through the preform is present, so reactant vapors follow tortuous path 28 through the porosity of the preform. Relatively darker regions of tortuous path 28 represent open space, while the relatively lighter regions represent matrix material. As can be seen in FIG. 3, matrix deposition is fairly limited to the regions of tortuous path 28 near either surface of the preform. In FIG. 4, the preform additionally includes holes 26 (only one is shown in FIG. 4), such that reactant vapors can traverse tortuous path 28 and hole 26, defining a generally straight path through the preform. Accordingly, the extent of matrix deposited (lighter color within tortuous path 28 and hole 26) is greater than in FIG. 3, leaving far less open space (darker color within tortuous path 28 and hole 26) within the preform. In general, the formation of holes 26 in the preform may reduce the CVI processing to about 25% to 75% of processing time without holes 26, while achieving a substantially similar density.

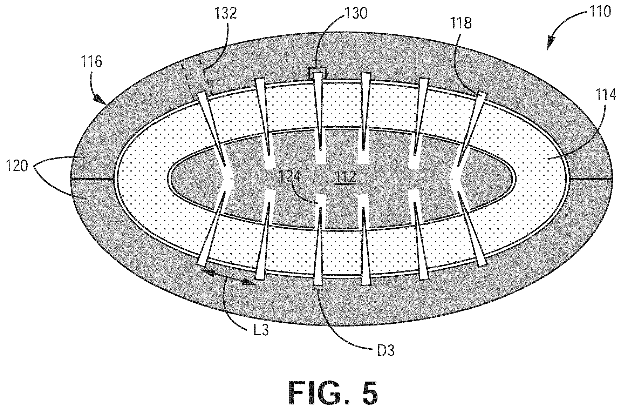

FIG. 5 is a simplified cross-sectional illustration of alternative perforating tooling assembly 110. Tooling assembly 110 includes inner fixture 112 supporting curved preform 114 thereupon. Curved preform 114 can be substantially similar to preform 14 in that it is a fibrous and porous ceramic (e.g., SiC) structure, although preform 114 is formed as an airfoil, rather than as a planar structure. Inner fixture 112 has curvature corresponding to preform 114. In one embodiment, preform 114 can be formed/laid-up over inner fixture 112 like as if it were a mandrel. Spiked array 116 encloses preform 114 and inner fixture 112 therein. Spiked array 116 is correspondingly curved to conform to the shape of preform 114. To facilitate the assembly of spiked array 116 over preform 114, spiked array 116 can include multiple pieces, or plates 120, such as the two curved halves shown in FIG. 5.

An array of spikes 118 can extend from each plate 120. Spikes 118 can be inserted into and through preform 114 to form a perforated preform 114. Accordingly, inner fixture 112 includes receiving holes 124 corresponding to spikes 118, which can have various dimensions depending on the dimensions of spike 118 and the thickness of preform 114. Like tooling assembly 10, inner fixture 112 can be formed from graphite or a metal, and spiked array 116 can be at least partially metallic, with ceramic coated metallic spikes. Spikes 118 can be spaced apart from adjacent spikes a distance L3 ranging from 0.1 mm to 1.0 mm. Each spike 118 can further have a short to medium taper, and a diameter D3 ranging from 0.1 mm to 1.0 mm. L3 and D3 create corresponding spacing and dimensions of holes (not visible in FIG. 5) within preform 114. Although shown with a more exaggerated taper in FIG. 5, spikes 118 can have a short to medium taper in some embodiments, similar to spikes 18, without departing from the scope of the invention. Such spikes would create generally cylindrical holes in preform 114, similar to holes 26 of FIG. 2. Spikes 118 can be integral with plates 120 of spiked array 116 in one embodiment, in an alternative embodiment, fittings 130 can be formed in plates 120 such that spikes 118 can be removably attached to plates 120, allowing for removal and/or replacement of spikes 118. Further, guide holes 132, represented by dashed lines in FIG. 5, can be included in plates 120, particularly in regions with greater curvature. This allows for an individual spike 118 to be inserted preform 114 at the desired angle relative to its outer surface. Accordingly, an embodiment of tooling assembly 110 can include plates 120 with integral and/or removably attached spikes 118, as well as spike-free regions aligned with guide holes 132 for manual insertion of individual spikes 118. Spikes 118 can be metallic and further coated with a ceramic material in some embodiments. Preform 114 can similarly be treated with a lubricant solution, stabilized, and transferred to other tooling for CVI.

Tooling assemblies 10, 110 can be used when infiltrating preforms 14, 114, via CVI, to deposit interface coatings (e.g., layers of BN, SiC, silicon-doped BN, etc.) and/or to form a matrix (e.g., SiC) to create a CMC part. Such CMC parts can be incorporated into aerospace, maritime, or industrial equipment, to name a few, non-limiting examples.

### Discussion of Possible Embodiments

The following are non-exclusive descriptions of possible embodiments of the present invention.

A tooling assembly for perforating a fibrous preform comprises a tooling fixture comprising a plurality of receiving holes, and a spiked array comprising a plate and a plurality of metallic spikes projecting away from the plate and toward the tooling fixture, each of the plurality of metallic spikes corresponding to and extending towards one of the plurality of receiving holes. The spiked array is engageable with the tooling fixture such that the plurality of spikes extend at least partially into respective ones of the plurality of receiving holes.

The tooling assembly of the preceding paragraph can optionally include, additionally and/or alternatively, any one or more of the following features, configurations and/or additional components:
In the above tooling assembly, each spike of the plurality of spikes can be spaced apart from an adjacent one of the plurality of spikes a distance ranging from 1.0 mm and 10 mm.

In any of the above tooling assemblies, each spike of the plurality of spikes can have a diameter ranging from 0.1 mm to 1.0 mm.

In any of the above tooling assemblies, each spike of the plurality of spikes can have a short taper or a medium taper.

In any of the above tooling assemblies, each spike of the plurality of spikes can be coated with a ceramic material.

In any of the above tooling assemblies, the tooling fixture can further include a plate in which the plurality of receiving holes are disposed.

In any of the above tooling assemblies, the plate of the spiked array and the plate of the tooling fixture can be planar.

In any of the above tooling assemblies, the tooling fixture can be formed from one of graphite or a metallic material.

In any of the above tooling assemblies, the spiked array can include a plurality of plates, each of the plurality of plates including a plurality of metallic spikes projecting therefrom.

In any of the above tooling assemblies, at least one of the plurality of plates can be curved.

In any of the above tooling assemblies, at least one plate of the plurality of plates can further include a plurality of guide holes extending completely through the at least one plate.

In any of the above tooling assemblies, at least a subset of the plurality of metallic spikes can be removably attached to the plurality of plates.

A method of preparing a fibrous preform for use in a ceramic matrix composite comprises supporting the preform with a tooling fixture, and perforating the preform with a spiked array to form a perforated preform, the spiked array comprising a plate with a plurality of metallic spikes projecting away from the plate. When perforating the preform, the plurality of metallic spikes extend at least partially into a plurality of respective receiving holes in the tooling fixture.

The method of the preceding paragraph can optionally include, additionally and/or alternatively, any one or more of the following features, configurations and/or additional components:
The above method can further include prior to perforating the preform, applying a lubricant solution to the preform.

In any of the above methods, the lubricant solution can include at least one of water with polyvinyl alcohol, and alcohol with polyvinyl butyral.

In any of the above methods, when perforating the preform, the plurality of metallic spikes can be inserted into the preform such that they extend fully through a thickness of the preform.

Any of the above methods can further include with the plurality of spikes still inserted into the perforated preform, stabilizing the perforated preform via a drying process to remove the water or the alcohol of the lubricant solution.

In any of the above methods, stabilizing the preform can further include removing the polyvinyl alcohol or the poly vinyl butyral via a heating process.

A perforated preform formed via any of the above methods can further include a plurality of cylindrical holes extending through a thickness of the preform. Each hole of the plurality of holes can be spaced apart from an adjacent hole of the plurality of holes a distance ranging from 1.0 mm to 10 mm, and each hole of the plurality of holes can have a diameter ranging from 0.1 mm to 1.0 mm.

In the above perorated preform, the preform can be formed from tows of silicon carbide.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A tooling assembly (10; 110) for perforating a fibrous preform (14; 114), the tooling assembly (10; 110) comprising:
a tooling fixture (12; 112) comprising a plurality of receiving holes (24; 124); and
a spiked array (16; 116) comprising a plate (20; 120) and a plurality of metallic spikes (18; 118) projecting away from the plate (20; 120) and toward the tooling fixture (12; 112), each of the plurality of metallic spikes (18; 118) corresponding to and extending towards one of the plurality of receiving holes (24; 124),
wherein the spiked array (16; 116) is engageable with the tooling fixture (12; 112) such that the plurality of spikes (18; 118) extend at least partially into respective ones of the plurality of receiving holes (24; 124).

2. The tooling assembly of claim 1, wherein each spike (18; 118) of the plurality of spikes (18; 118) is spaced apart from an adjacent one of the plurality of spikes (18; 118) a distance (L1; L3) ranging from 1.0 mm and 10 mm; and/or wherein each spike (18; 118) of the plurality of spikes (18; 118) has a diameter (D1; D3) ranging from 0.1 mm to 1.0 mm.

3. The tooling assembly of claim 1 or 2, wherein each spike (18; 118) of the plurality of spikes (18; 118) has a short taper or a medium taper.

4. The tooling assembly of any preceding claim, wherein each spike (18; 118) of the plurality of spikes (18; 118) is coated with a ceramic material.

5. The tooling assembly of any preceding claim, wherein the tooling fixture (12) further comprises a plate (22) in which the plurality of receiving holes (24) are disposed.

6. The tooling assembly of claim 5, wherein the plate (20) of the spiked array (16) and the plate (22) of the tooling fixture (12) are planar.

7. The tooling assembly of any preceding claim, wherein the tooling fixture (12; 112) is formed from one of graphite or a metallic material.

8. The tooling assembly of any preceding claim, wherein the spiked array (116) comprises a plurality of plates (120), each of the plurality of plates (120) comprising a plurality of metallic spikes (118) projecting therefrom.

9. The tooling assembly of claim 8, wherein at least one of the plurality of plates (120) is curved, wherein at least one plate (120) of the plurality of plates (120) optionally further comprises a plurality of guide holes (132) extending completely through the at least one plate (120).

10. The tooling assembly of claim 8 or 9, wherein at least a subset of the plurality of metallic spikes (118) are removably attached to the plurality of plates (120).

11. A method of preparing a fibrous preform (14; 114) for use in a ceramic matrix composite, the method comprising:
supporting the preform (14; 114) with a tooling fixture (12; 112); and
perforating the preform (14; 114) with a spiked array (16; 116) to form a perforated preform (14; 114), the spiked array (16; 116) comprising a plate (20; 120) with a plurality of metallic spikes (18; 118) projecting away from the plate (20; 120);
wherein when perforating the preform (14; 114), the plurality of metallic spikes (18; 118) extend at least partially into a plurality of respective receiving holes (24; 124) in the tooling fixture (12; 112).

12. The method of claim 11 and further comprising: prior to perforating the preform (14; 114), applying a lubricant solution to the preform (14; 114), wherein the lubricant solution optionally comprises at least one of water with polyvinyl alcohol, and alcohol with polyvinyl butyral.

13. The method of claim 11 or 12, wherein when perforating the preform (14; 114), the plurality of metallic spikes (18; 118) are inserted into the preform (14; 114) such that they extend fully through a thickness of the preform (14; 114).

14. The method of claim 13 and further comprising: with the plurality of spikes (18; 118) still inserted into the perforated preform (14; 114), stabilizing the perforated preform (14; 114) via a drying process to remove the water or the alcohol of the lubricant solution, wherein stabilizing the preform (14; 114) optionally further comprises removing the polyvinyl alcohol or the poly vinyl butyral via a heating process.

15. A perforated preform (14; 114) formed via the method of any of claims 11 to 14, the perforated preform (14; 114) comprising
a plurality of cylindrical holes (26) extending through a thickness of the preform (14; 114),
wherein each hole (26) of the plurality of cylindrical holes (26) is spaced apart from an adjacent hole (26) of the plurality of cylindrical holes (26) a distance (L2) ranging from 1.0 mm to 10 mm, and
wherein each hole (26) of the plurality of cylindrical holes (26) has a diameter (D2) ranging from 0.1 mm to 1.0 mm,
wherein the preform (14; 114) is optionally formed from tows of silicon carbide.
